# EUROPEAN PATENT APPLICATION

(11) **EP 0 744 422 A1**
(43) Date of publication of application: **27.11.1996**
(21) Application number: 95939402.4
(22) Date of filing: 08.12.1995
(51) Int. Cl.: C08G 18/77, C08G 18/79, C09D 175/00

(54) **POLYURETHANE RESIN**

(30) Priority: 08.12.1994 JP 304689/94
(71) Applicant: Kyowa Hakko Kogyo Co., Ltd., Chiyoda-ku, Tokyo 100 (JP)
(72) Inventor: MATSUSHITA, Shoshiro, Mie 512 (JP); MATSUOKA, Toshihiro, Mie 510 (JP); FUKUDA, Yukitoshi, Mie 510 (JP); TANAKA, Hajime, Mie 510 (JP); IMAI, Takahiro, Mie 510 (JP)
(74) Representative: VOSSIUS & PARTNER
(86) International application number: JP9502522
(87) International publication number: WO9617881

(57) **Abstract**

A polyurethane resin which is formed by reaction of a polyol with a curing agent comprising a trimer of aliphatic diisocyanate or of alicyclic diisocyanate, and lysine triisocyanate represented by the formula below. 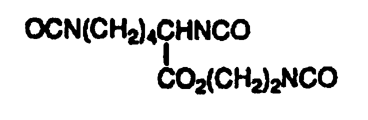 The polyurethane resin is of non-yellowing type and superior in quick-curing properties, flexibility, and impact resistance. It is useful as a coating material for automobiles and building external finishing which needs good scratch resistance and chipping resistance.

## Description

### Technical field:

The present invention relates to a polyurethane resin which is obtained by reaction of a polyol with a polyisocyanate mixture comprising a trimer of aliphatic diisocyanate or of alicyclic diisocyanate, and lysine triisocyanate. The polyurethane resin pertaining to the present invention is of non-yellowing type and is superior in quick-curing properties, flexibility, and impact resistance. The polyurethane resin of the present invention is useful as a coating material for automobiles and building external finishing which needs scratch resistance and chipping resistance.

### Background art:

The polyurethane resin is formed by reaction of an active hydrogen compound with an isocyanate compound. the active hydrogen compound is typified by polyether polyol, polyester polyol, and polyacryl polyol.

Polyurethane resin is classified into two types --yellowing type and non-yellowing type -- depending on the kind of the isocyanate from which the polyurethane resin is made. The yellowing type is produced from tolylene diisocyanate (TDI), 4,4'-diphenylmethane diisocyanate (MDI), or the like, and is used mainly for polyurethane foam and also for elastomers, synthetic leather, and woodworking paints.

The non-yellowing type of the polyurethane resin is produced from an aliphatic or alicyclic isocyanate or a derivative thereof, such as hexamethylene diisocyanate (HDI), isophorone diisocyanate (IPDI), 2,2,4-trimethylhexamethylene diisocyanate, and dicyclohexylmethane diisocyanate. Because of good weathering resistance, the non-yellowing type is in general use as a coating material for automobile repair, heavy corrosion resistance, plastic products, quality woodworking products, building external finishing, passenger aircraft, and rolling stock, and is also useful in the field of adhesive and sealant.

For the production of the non-yellowing polyurethane resin, HDI (as an aliphatic isocyanate) or IPDI (as an alicyclic isocyanate) is used in the form of polyisocyanate prepolymer, such as adduct with trimethylolpropane (TMP), biuret, and isocyanurate. It is used as a curing agent for urethane coating.

Each polyisocyanate prepolymer has its own peculiar characteristic properties. For example, a TMP adduct is superior in solubility and resin compatibility and an IPDI adduct is superior in quick-drying properties. Moreover, an HDI biuret is characterized by its high -NCO group content and an isocyanurate gives rise to a polyurethane resin with high hardness , high polarity , outstanding thermal and chemical stability because of its ability to take on a plane structure. An isocyanurate of IPDI yields a polyurethane resin which is superior in solvent resistance but is inferior in flexibility.

Although non-yellowing polyurethane resin is useful as a quality coating material with good weathering resistance, it needs further improvement. Quick drying is one of such requirements. This property is important for polyisocyanate (as a curing agent for air-drying polyurethane resin) which decreases in curing rate at low temperatures (as in winter). A remedy for slow curing is to use both HDI and IPDI polyisocyanates in mixture. A disadvantage of this remedy is that the IPDI polyisocyanate yields a polyurethane resin lacking flexibility.

Another requirement is high scratch resistance, which is essential for the coating film to keep its good appearance. This requirement is not fully met by the above-mentioned HDI/IPDI polyisocyanates mixture which improves the quick-drying properties.

Japanese Patent Published Unexamined Patent Application Nos. 78460/1982 and 132725/1992 disclose a mixture of HDI/IPDI polyisocyanates in the form of isocyanate-isocyanurate which is obtained by conversion of HDI and IPDI into isocyanurate. Preparation of this mixture needs a troublesome step of forming isocyanurate.

### Disclosure of the invention:

It is an object of the present invention to provide a polyurethane resin which is formed by reaction of a polyol with a curing agent comprising a trimer of aliphatic or of alicyclic diisocyanate, and lysine triisocyanate represented by the formula below.

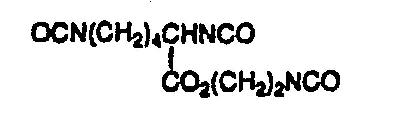

The aliphatic diisocyanate used in the present invention includes, for example, hexamethylene diisocyanate (HDI) and 2,2,4-trimethylhexamethylene diisocyanate, which are of non-yellowing type. The alicyclic diisocyanate used in the present invention includes, for example, isophorone diisocyanate (IPDI) and dicyclohexylmethane diisocyanate, which are of non-yellowing type. Of these examples, HDI is preferable.

According to the present invention, the aliphatic or alicyclic diisocyanate is used in the form of trimer. Examples of the HDI trimer include adduct with trimethylolpropane, biuret, and isocyanurate.

According to the present invention, the aliphatic or alicyclic diisocyanate trimer is used in combination with lysine triisocyanate (LTI). The molar ratio of the aliphatic or alicyclic diisocyanate trimer to lysine triisocyanate (LTI)is in the range of 5/95 to 95/5, preferably 30/70 to 70/30, in terms of -NCO group content.

The polyol used in the present invention is not specifically restricted so long as it forms the urethane linkage upon reaction with the aliphatic or alicyclic diisocyanate trimer. The polyol includes, for example, diols, triols, tetraols, pentols, and hexitol (which are compounds having two or more hydroxyl groups in the molecule). The polyol also includes, for example, polyester polyols, polyether polyols, and polyacryl polyols (which are compounds having two or more hydroxyl groups in the molecule). They may be used alone or in combination with one another.

These compounds are exemplified below.
Diols (compounds having two hydroxyl groups in the molecule): ethylene glycol, propylene glycol, β,β'-dihydroxydiethylether (diethylene glycol), dipropylene glycol, 1,4-butylene glycol, 1,3-butylene glycol, polyethylene glycol, polypropylene glycol, polypropylene-polyethylene glycol, and polybutylene glycol.
Polyols (compounds having three or more hydroxyl groups in the molecule): glycerin, trimethylolpropane, pentaerythritol, sorbitol, 2-methyl glycoside, and 1,2,6-hexatriol.
Polyether polyols: those compounds formed by addition of propylene oxide or ethylene oxide to a polyhydric alcohol such as glycerin and propionglycol.
Polyester polyols: those compounds formed by condensation reaction of a carboxylic acid with a diol or triol, the carboxylic acid including adipic acid, dimer acid, phthalic anhydride, and isophthalic acid, the diol or triol including ethylene glycol, diethylene glycol, propylene glycol, trimethylpropane, and glycerin.
Polyacryl polyols: those compounds formed by copolymerization of a polymerizable monomer having one or more hydroxyl groups in the molecule with another monomer capable of copolymerization with the former. Examples of the polymerizable monomer having one or more hydroxyl groups in the molecule include 2-hydroxyethyl acrylate, 2-hydroxypropyl acrylate, 2-hydroxybutyl acrylate, 2-hydroxyethyl methacrylate, 2-hydroxypropyl methacrylate, 3-hydroxypropyl methacrylate, 4-hydroxybutyl methacrylate, 2-hydroxypentyl methacrylate, glycerin monoester of methacrylic acid, trimethylolpropane monoester of acrylic acid, 2-hydroxy-3-chloropropyl acrylate, and 2-hydroxy-3-chloropropyl methacrylate. Examples of the monomer capable of copolymerization with the former include acrylic acid and esters thereof, methacrylic acid and esters thereof, styrene and derivatives thereof, vinyl esters, acrylonitrile, and methacrylonitrile.

The polyol used in the present invention should preferably have hydroxyl value of 20-500. The polyurethane resin of the present invention should preferably have an -NCO group / -OH group ratio (in mol) in the range of 0.1 to 1.5, particularly 0.5 to 1.0.

The polyurethane resin of the present invention is formed by reaction of a polyol with a curing agent comprising a trimer of aliphatic diisocyanate or of alicyclic diisocyanate, and lysine triisocyanate represented by the formula below.

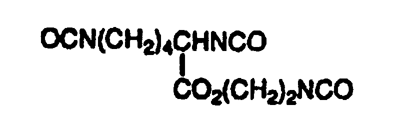

The above-mentioned components may be incorporated with a solvent for viscosity adjustment. It is essential that the solvent be free of active hydrogen. Examples of the solvent are given below.
Hydrocarbon solvents: benzene, toluene, xylene, and aromatic naphtha.
Ester solvents: ethyl acetate, butyl acetate, ethyl cellosolve, butyl cellosolve, hexyl acetate, amyl acetate, ethyl acetate, and butyl propionate.
Ketone solvents: acetone, methyl ethyl ketone, methyl isopropyl ketone, methyl isobutyl ketone, diethyl ketone, and cyclohexanone.
Glycol ester solvents: ethylene glycol monoethyl ether acetate and diethylene glycol monoethyl ether acetate.

The polyurethane resin of the present invention is evaluated according to JIS K5400-1990 (Method for testing the physical properties of coating film).
(1) Film hardness by pencil test- Scratch value by pencil (according to JIS K5400-1990, Section 8.4.2 [pp. 76]): This test method consists of scratching the coating film with a pencil which is held firmly against at a 45° angle on the coating film. The coating film will be scratched if it is softer than the pencil used. The hardness of the coating film is expressed in terms of the hardness (from 6B to 9H) of the hardest pencil which draw a line without a scratch on the coating film.
(2) Adhesion (cross-hatch test) according to JIS K5400-1990, Section 8.5.2 [pp.85]): Adhesion is a measure of the coating film to resist peeling. It depends on the strength of the coating film, the substrate of the coating film, and the affinity of the coating film for the substrate. The test method consists of cross-cutting the coating film with a sharp knife or a diamond stylus (down to the substrate) at intervals of 1 mm to make 100 small squares (10 x 10), pressing a piece of adhesive tape against the specimen under a prescribed pressure, and immediately peeling off the adhesive tape. The number of the squares remaining unpeeled is counted. The cutting angle should be 30° for the knife and 90° for the diamond stylus.
(3) Ericssen test (according to JIS K5400-1990, Section 8.2.2 [pp. 76]): This test method consists of pushing a rod (with a round tip, 20 mm or 15 mm in diameter) at a uniform rate against the back of a coated specimen. The coating film is examined for cracking and peeling. The test result is expressed in terms of the distance over which the rod has been pushed to cause cracking and peeling to the coating film.
(4) Impact resistance (according to JIS K5400-1990, Section 8.3.2 [pp. 79]): This test method consists of dropping a dart of prescribed weight from a prescribed height on the specimen (placed on a holder with the coating film up or down) using a DuPont impact tester. The coating film is examined for cracking and peeling. The height ranges from 10 cm to 50 cm at intervals of 10 cm. The dart weight is 1 kg or 0.5 kg. The dart has a diameter which ranges from 1/16" to 1/2". The test results are expressed good impact resistance in terms of the maximum height and weight and the minimum diameter which do not cause cracking and peeling to the coating film. The opposite test result are expressed poor impact resistance.
(5) Xylene resistance: This test method consists of rubbing the specimen 30 times with a cloth moistened with xylene. The specimen is checked to see if the substrate is exposed.

The polyurethane resin of the present invention gives a coating film which has quick-drying properties as well as good flexibility. The coating film is also superior in weathering resistance, chemical resistance, water resistance, and adhesion.

### Best mode for carrying out the invention:

The invention will be described in more detail with reference to the following Examples and Comparative Examples.

### Example 1

Hexamethylene diisocyanate in isocyanurate form (containing 21.2% -NCO group and 100% nonvolatile matter) was mixed with lysine triisocyanate (containing 47.2% -NCO group and 100% nonvolatile matter), such that -NCO group molar ratio of hexamethylene diisocyanate in isocyanurate to lysine triisocyanate was 50/50. The mixture was further mixed with polyacryl polyol (having a hydroxyl value of 50.8% and containing 49.8% nonvolatile matter) such that the amount of hydroxyl groups is equivalent to the amount of isocyanate groups. The resulting polyurethane resin mixture was diluted with a 70/30 mixture of xylene and cellosolve acetate so as to adjust the viscosity (Ford cup #4, 18 seconds).

The diluted coating solution was applied by spraying to a steel sheet (Bondelite 144 made by Migaki Co., Ltd.) such that the coating film had a thickness of 30-40 µm after drying. For curing, the coating film was allowed to stand at room temperature for 7 days. The properties of the cured coating film are shown in Table 1. It is noted that the coating film in this example is superior in flexibility, adhesion, and initial curing properties to the polyurethane coating film formed from a mixture of hexamethylene diisocyanate and isophorone diisocyanate.

### Example 2

A mixture was prepared from hexamethylene diisocyanate in isocyanurate form (containing 21.2% -NCO group and 100% nonvolatile matter) and lysine triisocyanate (containing 47.2% -NCO group and 100% nonvolatile matter), such that the -NCO group molar ratio of hexamethylene diisocyanate in isocyanurate to lysine triisocyanate was 70/30. Using this mixture, the subsequent steps were repeated in the same manner as in Example 1. The properties of the cured coating film are shown in Table 1. It is noted that the coating film in this example is superior in flexibility, adhesion, and initial curing properties to the polyurethane coating film formed from a mixture of hexamethylene diisocyanate and isophorone diisocyanate.

### Comparative Example 1

A mixture was prepared from hexamethylene diisocyanate in isocyanurate form (containing 21.2% -NCO group and 100% nonvolatile matter) and isophorone diisocyanate (containing 11.5% -NCO group and 70% nonvolatile matter), such that the -NCO group molar ratio of hexamethylene diisocyanate in isocyanurate to isophorone diisocyanate was 50/50. Using this mixture, the subsequent steps were repeated in the same manner as in Example 1. The properties of the cured coating film are shown in Table 1.

### Comparative Example 2

Using hexamethylene diisocyanate in isocyanurate form (containing 21.2% -NCO group and 100% nonvolatile matter) alone, the same steps as in Example 1 were repeated. The properties of the cured coating film are shown in Table 1.

### Comparative Example 3

Using isophorone diisocyanate (containing 11.5% -NCO group and 70% nonvolatile matter) alone, the same steps as in Example 1 were repeated. The properties of the cured coating film are shown in Table 1.

**Table 1**

| | Example 1 | Example 2 | Comparative Example 1 | Comparative Example 2 | Comparative Example 3 |
|---|---|---|---|---|---|
| Isocyanate (molar ratio) | HDI/LTI (70/30) | HDI/LTI (50/50) | HDI/IPDI (50/50) | HDI | IPDI |

| Pencil hardness | | | | | |
|---|---|---|---|---|---|
| 1st day | F | F | F | HB | F |
| 3rd day | H | H | H | H | H |
| 7th day | H | H | H | H | H |
| Adhesion (cross-hatch test) | 100/100 | 100/100 | 100/100 | 100/100 | 0/100 |
| Ericssen test (mm) | 9.9 | 9.4 | 1.1 | 9.9 | 2.3 |
| Impact resistance (cm) 1/2in, 1 kg | 20 | 15 | 5 | 15 | 2.3 |
| Xylene resistance | good | good | fair | good | fair-poor |

### Exploitation in industry:

The present invention provides a polyurethane resin of non-yellowing type which is superior in quick-curing properties, flexibility, and impact resistance. It is useful as a coating material for automobiles and building external finishing which needs good scratch resistance and chipping resistance.

## Claims

1. A polyurethane resin which is formed by reaction of a polyol with a curing agent comprising a trimer of aliphatic diisocyanate or of alicyclic diisocyanate, and lysine triisocyanate represented by the formula below.

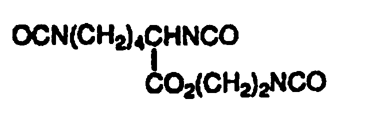

2. The polyurethane resin as defined in claim 1, wherein the aliphatic diisocyanate is selected from hexamethylene diisocyanate and 2,2,4-trimethylhexamethylene diisocyanate.

3. The polyurethane resin as defined in claim 1, wherein the aliphatic diisocyanate is selected from isophorone diisocyanate and dicyclohexylmethane diisocyanate.

4. The polyurethane resin as defined in claim 1, wherein the polyol is selected from a compound having two hydroxyl groups in the molecule, a compound having three or more hydroxyl groups in the molecule, polyether polyol, polyester polyol, and polyacryl polyol.

5. The polyurethane resin as defined in claim 1 or 4, wherein the polyol has hydroxyl value in the range of 20 to 500.

6. The polyurethane resin as defined in claim 4, wherein the compound having two hydroxyl groups in the molecule is selected from ethylene glycol, propylene glycol, β,β'-dihydroxy diethylether (diethylene glycol), dipropylene glycol, 1,4-butylene glycol, 1,3-butylene glycol, polyethylene glycol, polypropylene glycol, polypropylene-polyethylene glycol, and polybutylene glycol.

7. The polyurethane resin as defined in claim 4, wherein the compound having three or more hydroxyl groups in the molecule is selected from glycerin, trimethylolpropane, pentaerythritol, sorbitol, 2-methyl glycocide, and 1,2,6-hexatriol.
